Europäisches Patentamt

European Patent Office

Office européen des brevets

(11) Publication number:

**0 043 237**
**B1**

## EUROPEAN PATENT SPECIFICATION

(45) Date of publication of patent specification: **09.01.85**

(21) Application number: **81302855.2**

(22) Date of filing: **24.06.81**

(51) Int. Cl.⁴: **B 60 K 23/08,** B 60 K 17/34

(54) Vehicle drive control system.

(30) Priority: **27.06.80 JP 88331/80**

(43) Date of publication of application:
**06.01.82 Bulletin 82/01**

(45) Publication of the grant of the patent:
**09.01.85 Bulletin 85/02**

(84) Designated Contracting States:
**CH DE FR GB LI SE**

(56) References cited:
**AT-B- 8 388**
**GB-A-2 021 812**

**Patents Abstracts of Japan, Vol. 2, No. 142, 24
November 1978, page 4767M78**
**Patents Abstracts of Japan, Vol. 2, No. 142, 24
November 1978, page 4767M78**
**Patents Abstracts of Japan, Vol. 3, No. 42, 12
April 1979, page 142M55**
**Patents Abstracts of Japan, Vol. 5, No. 25, 14
February 1981, page (M-55) 697**

(73) Proprietor: **FUJI JUKOGYO KABUSHIKI KAISHA
7-2 Nishishinjuku 1-chome Shinjuku-ku
Tokyo (JP)**

(72) Inventor: **Kageyama, Hayashi
28-14, Hachimancho
Ohta-shi Gunma-Pref. (JP)**

(74) Representative: **Batchellor, John Robert et al
BATCHELLOR, KIRK & EYLES 2 Pear Tree Court
Farringdon Road
London EC1R 0DS (GB)**

Courier Press, Leamington Spa, England.

## Description

The present invention relates to a control system for the transmission of a four-wheel drive vehicle for automatically changing the mode of operation of the transmission in accordance with the driving conditions. The present invention relates more particularly to a system which employs an electro-magnetic clutch and is arranged to improve the driving characteristics at a sharp corner.

In conventional four-wheel drive vehicles, a transmission device is adapted to drive either two-wheels or four-wheels through a dog clutch which is manually operated by a select lever.

Generally, when a vehicle is turned, the rotating speeds of front wheels and rear wheels must be different because of difference between turning radii of front wheels and rear wheels. However, a central differential gear for absorbing the difference is not usually incorporated to avoid complications of construction. Accordingly, when a vehicle turns at a small radius, the rear wheels act to drive the vehicle at a speed higher than the speed of the front wheels because the rear wheels travel on a circle of a radius smaller than that of front wheels. This causes the so-called 'tight-corner-braking' phenomenon whereby the vehicle cannot be driven smoothly at a sharp corner.

One attempt to overcome this problem is shown in JP—A—54-20530, in which there is disclosed a drive control system for a vehicle comprising a transmission for transmitting power to two main drive wheels; a clutch for selectively transmitting said power to drive two additional wheels; a drive select switch for actuating the clutch and a control circuitry including means for detecting a steering angle; the control circuitry being adapted to disengage the clutch when the steering angle exceeds a predetermined value. However, it is also desirable to be able to actuate the four-wheel drive under conditions when insufficient traction is provided by the main drive wheels. Accordingly, the present invention provides a drive control system for a vehicle comprising a transmission for transmitting power to two main drive wheels; a clutch for selectively transmitting said power to drive two additional wheels; a drive select switch for actuating said clutch; control circuitry including means for detecting a steering angle; the control circuitry being adapted to disengage the clutch when the steering angle exceeds a predetermined value; characterised in that the clutch is electromagnetic and in that a slip detecting circuit is provided for detecting the slippage of one of said main drive wheels, the control circuit being so arranged as to supply clutch current to said electro-magnetic clutch in accordance with the output signal of the slip detecting circuit.

One embodiment of the present invention will now be described, by way of example, with reference to the accompanying drawings, in which:—

Figure 1 is a cross-sectional view showing an embodiment of an apparatus in accordance with the present invention, and

Figure 2 is a block diagram of a control circuit for the apparatus.

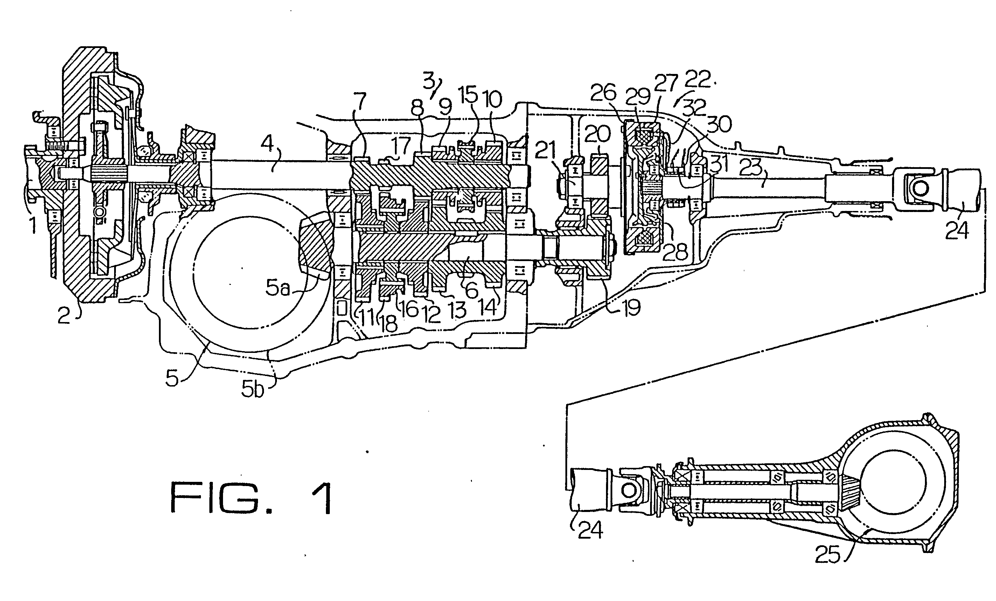

In Figure 1, numeral 1 designates a crankshaft of an internal combustion engine mounted on a car (not shown). The crankshaft 1 is connected with an input shaft 4 of a transmission 3 through a well-known mechanical clutch 2 which, in turn, is connected with a front differential device 5 disposed between the transmission 3 and the clutch 2. The transmission 3 has an output shaft 6 disposed parallel to the input shaft 4. The input shaft 4 is formed integrally with 1st-speed gear 7 and 2nd-speed gear 8 and has a 3rd-speed gear 9 and 4th-speed gear 10 rotatably mounted thereon. The output shaft 6 has gears 11 and 12 engaged with gears 7 and 8 respectively, gears 13 and 14 engaged with gears 9 and 10 respectively, and a synchromesh mechanism 15 arranged between gears 9 and 10 and a synchromesh mechanism 16 between gears 11 and 12. The synchromesh mechanism 16 is operated to engage the gear 11 with the output shaft 6 by a shift lever (not shown) and thus the power from the input shaft 4 is transmitted to the output shaft 6 through gears 7 and 11 at the 4th-speed transmission. The other three steps of forward drive transmission are achieved similarly. Rearward drive transmission is achieved by engagement of a gear 17 provided on the shaft 4 with a gear 18 formed on sleeve side of synchromesh mechanism 16 through an idling gear (not shown). A drive pinion 5a for the front differential device 5 is formed integrally on the front end of the output shaft 6 and is engaged with a rear gear 5b.

The rear end of the output shaft 6 is connected to a shaft 21 disposed in alignment with the input shaft 4 through a pair of gears 19, 20 which are engaged with each other. This shaft 21 is to be connected to a rear differential device 25 through an electro-magnetic clutch 22, shaft 23, a propeller shaft 24, and so on. The electro-magnetic clutch comprises a drive member 27 secured to the shaft 21 through a drive plate 26, a driven member 28 securely mounted on the shaft 23, a magnetising coil 29 provided in the drive member 27, clutch brushes 30, slip rings 31 and leads 32 connected to the coil 29 to generate magnetic flux. The electro-magnetic clutch is engaged by magnetic powder aggregated in a small gap between the drive member 27 and the driven member 28 by the magnetic flux.

As clutch current supplied to the coil 29 increases gradually, the torque of the clutch increases.

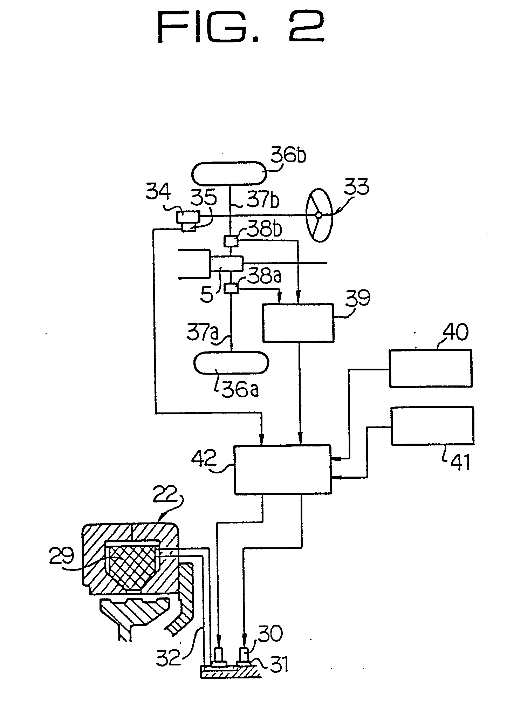

An embodiment of the electro-magnetic clutch control system according to the present invention will now be described with reference to Figure 2.

A steering angle sensor 35 is provided on a steering gear box 34 of a steering device 33 to detect steering angle. The steering angle sensor 35 is so arranged that, when the steering angle exceeds a predetermined angle, an output signal is generated which increases with increase of the angle. A pair of rotational speed sensors 38a, 38b are provided respectively on wheel shafts 37a and 37b which are connected with respective front wheels 36a and 36b as main driving wheels. A slip detecting circuit comprising a comparator is applied with output signals from these rotational speed sensors 38a and 38b and adapted to detect the occurrence of slippage by the difference between these output signals. A vehicle speed sensor 40 and a manually operated select switch 41 for selecting two-wheel or four-wheel drive are also provided. The sensors 35, 40, the slip detecting circuit 39 and the select switch 41 are connected to a control circuit 42 for controlling the clutch current passing through the coil 29. The control circuit 42 comprises gate circuits and a current control circuit. The control circuit is so arranged that, when the select switch 41 is operated to select two-wheel drive, clutch current is cut off and, when four-wheel drive is selected, clutch current is applied to the coil in such a manner as to be increased stepwise so as to mitigate the shock caused by changing the transmission configuration.

When an output signal of the vehicle speed sensor 40 is applied to control circuit 42, whilst the select switch 41 is in the four-wheel drive position, and, in addition, the signal from the steering angle sensor 35 is applied thereto during turning of the vehicle, the clutch current is decreased with increase of the steering angle and cut off at a predetermined steering angle. Further, the control circuit 42 is adapted to apply the clutch current to the coil 29 to engage the clutch 22, when slippage of one of front wheels 36a, 36b is detected by the output of the detecting circuit 39.

In operation, when the select switch 41 is operated to the two-wheel drive to cut off clutch current, the magnetic clutch 22 is disengaged. Thus, the transmission of power of the engine to the rear wheels is cut off, so that the vehicle is driven by the front wheels. If, in the two-wheel drive condition, one of the front wheels slips, the control circuit 42 is actuated by the signal from the slip detecting circuit 39 to increase clutch current to rapidly engage the magnetic clutch 22. Thus, the power of transmission 3 is transmitted also to rear wheels through the propeller shaft 14 and the rear differential device 25, achieving four-wheel drive to thereby recover steady drive condition. When the vehicle is relieved from slipping, the slip detecting circuit 39 sends no more signals and the transmission turns back to the two-wheel drive condition. If the select switch 41 is turned to the four-wheel drive position, magnetic clutch 22 is engaged, resulting in four-wheel drive. When the vehicle turns a sharp corner, steering angle sensor 35 produces an output signal for controlling the clutch current. Thus, the clutch current decreases as the steering angle increases. Thus, less power is transmitted to the rear wheels to thereby drive them at lower speed. Thus, the vehicle can be smoothly driven at a sharp corner. After the corner, there is no further signal from the steering angle sensor 35, so that the clutch current flows through the coil 29 to engage the magnetic clutch again. Thus, the power from the transmission 3 is transmitted to the rear wheels to achieve the four-wheel drive.

Since two-wheel or four-wheel is automatically selected in accordance with the drive condition, sensitive operability is obtainable. During turning of the vehicle under four-wheel drive, a part or whole of the drive power to the rear wheels is cut off by the electro-magnetic clutch. That is to say, the drive power is dissipated via the magnetic clutch 22, allowing a speed difference between front wheels and rear wheels so as to prevent the "tight-corner-braking" phenomenon and other accompanying problems. Although the illustrated system is provided with the vehicle speed sensor 40, it will be understood that the sensor is not always necessary.

## Claims

1. A drive control system for a vehicle comprising a transmission (3) for transmitting power to two main drive wheels (36a, 36b); a clutch (22) for selectively transmitting said power to drive two additional wheels; a drive select switch (41) for actuating said clutch (22); control circuitry including means (35) for detecting a steering angle; the control circuitry being adapted to disengage the clutch when the steering angle exceeds a predetermined value; characterised in that the clutch (22) is electro-magnetic and in that slip detecting circuit (39) is provided for detecting the slippage of one of said main drive wheels (36a, 36b), the control circuit (42) being so arranged as to supply clutch current to said electro-magnetic clutch (22) in acordance with the output signal of the slip detecting circuit (39).

2. A control system according to claim 1, wherein said control circuit (42) is adapted to operate to cut off the clutch current only when the drive select switch (41) is in the four-wheel position.

3. A control system according to claim 1 or claim 2 wherein said clutch current is arranged to decrease with increase of said steering angle

## Patentansprüche

1. Antriebsregelsystem für ein Fahrzeug, mit einer Übertragungsvorrichtung (3) zur Kraftübertragung auf zwei Hauptantriebsräder (36a, 36b); einer wahlweise die Kraftübertragung auf zwei zusätzliche Räder vornehmenden Kupplung (22); einem Antriebswahlschalter (41) zum Betätigen der Kupplung (22); einer mit Einrichtungen (35) zum Erfassen eines Lenkwinkels ausgestattete Regelschaltung zum Lösen der Kupplung, wenn der Lenkwinkel einen vorgegebenen Wert überschreitet; dadurch gekennzeichnet, daß die Kupplung (22) eine elektromagnetische ist, daß eine Schlupferfassungs-Schaltung (39) zum Erfassen des Schlupfes eines der Hauptantriebsräder (36a, 36b) vorgesehen ist, wobei die Regelschaltung (42) so angeordnet ist, daß sie entsprechend dem Ausgangssignal der Schlupferfassungs-Schaltung (39) der elektromagnetischen Kupplung (22) Kupplungsstrom zuführt.

2. Regelsystem nach Anspruch 1, dadurch gekennzeichnet, daß die Regelschaltung (42) den Kupplungsstrom nur dann abschaltet, wenn der Antriebswahlschalter (41) in der Vierradantriebs-Position steht.

3. Regelsystem nach Anspruch 1 oder Anspruch 2, dadurch gekennzeichnet, daß der Kupplungsstrom mit wachsendem Lenkwinkel abnimmt.

**Revendications**

1. Système de commande de propulsion pour un véhicule qui comprend une transmission (3) pour transmettre de l'énergie à deux roues motrices principales (36a, 36b); un accouplement (22) pour transmettre sélectivement cette énergie à deux roues supplémentaires; un sélecteur (41) pour actionner ledit accouplement (22); un circuit de commande incluant des moyens (35) pour détecteur l'angle de direction; le circuit de commande étant adapté à débrayer l'accouplement quand l'angle de direction dépasse une valeur prédéterminée; caractérisé en ce que l'accouplement (22) est un accouplement électromagnétique et en ce qu'un circuit (39) est prévu pour détecteur le patinage ou le glissement de l'une desdites roues motrices principales (36a, 36b), le circuit de commande (42) étant conçu pour fournir un courant d'excitation audit accouplement électromagnétique (22) en accord avec le signal de sortie du circuit de détection de patinage (39).

2. Système de commande selon la revendication 1, caractérisé en ce que ledit système de commande (42) n'est adapté à couper le courant d'excitation de l'accouplement que quand le sélecteur (41) est dans la position de marche à quatre roues motrices.

3. Système de commande selon la revendication 1 ou 2, caractérisé en ce que ledit courant d'excitation de l'accouplement est étudié pour diminuer à mesure que ledit angle de direction augmente.

FIG. 1

0 0043 237

# FIG. 2